# FASCICULE DE BREVET EUROPEEN

(11) **EP 1 769 429 B1**
(45) Date de publication et mention de la délivrance du brevet: **21.11.2007**
(21) Numéro de dépôt: 05749237.3
(22) Date de dépôt: 02.06.2005
(51) Int. Cl.: G06K 19/077

(54) **PROCEDE DE FABRICATION D'UN SUPPORT DE CARTE A PUCE MINI UICC AVEC ADAPTATEUR PLUG-IN UICC ASSOCIE ET SUPPORT OBTENU**
VERFAHREN ZUR HERSTELLUNG EINES MINI-UICC-CHIPKARTEN-TRÄGERS MIT EINEM ASSOZIIERTEN PLUG-IN-UICC-ADAPTER UND SO ERHALTENE HALTERUNG
METHOD OF PRODUCING A MINI UICC SMART CARD SUPPORT WITH AN ASSOCIATED PLUG-IN UICC ADAPTER, AND SUPPORT THUS OBTAINED

(30) Priorité: 08.07.2004 FR 0451478
(43) Date de publication de la demande: 04.04.2007
(73) Titulaire: GEMPLUS, 13420 Gémenos (FR)
(72) Inventeur: MARTINENT, Jean-François, Résid. l'Empyrée Bat. B, F-13090 Aix en Provence (FR); FIDALGO, Jean-Christophe, F-13420 Gemenos (FR)
(86) Numéro de dépôt international: PCT/EP2005/052544
(87) Numéro de publication internationale: WO 2006/010664

(56) Documents cités:
- DE-U1- 29 819 389
- FR-A- 2 778 002

## Description

La présente invention concerne le domaine des mini-cartes à puce.

Elle concerne plus particulièrement un procédé de fabrication d'une carte à puce (mini-UICC) d'un format réduit par rapport à un second format standard (plug-in UICC), et d'un adaptateur au second format (plug in UICC) associé à la carte à puce.

Il existe principalement trois formats standards de carte à puce sur le marché. Le premier est le format relatif à la norme ISO 7816 : 54mm x 85mm x 0,76mm pour les cartes à puce, essentiellement destinées à des opérations de communication, d'identification, ou de télébilletique par exemple.

Le second est relatif à la norme dite Plug-in UICC, essentiellement destiné à être inséré dans un téléphone mobile mais pouvant le cas échéant être utilisés dans d'autres dispositifs de communication ou des lecteurs de type USB. Elles ont un corps de carte de forme rectangulaire de 15mm x 25mm x 0,76mm, avec un détrompeur de 3mm par 3mm, sur un coin du support de la carte.

Le troisième, depuis l'année 2004, est relatif aux cartes dites de troisième génération "plug 3G" ou cartes mini-UICC dont la diminution de format résulte notamment d'une tendance à la miniaturisation des téléphones portables. Le format normalisé est 15mm X 12 X 0,76mm avec également un détrompeur de 2,5mm par 2,5mm, sur un coin du support de la carte.

On connaît différents procédés de fabrication d'adaptateur plug-in UICC dans lesquels, un adaptateur de format est extrait manuellement d'un premier support au format ISO grâce à une prédécoupe au format de l'adaptateur.

Ainsi la demande de brevet FR 9906729 illustrée aux figures 1 et 2, prévoit un adaptateur Plug-in UICC / carte réduite (mini-UICC) conformé de manière à recevoir une carte mini-UICC 60 ou "Plug 3G" (troisième génération). L'adaptateur 100 est délimité par une prédécoupe 20 dans un corps de carte 200 au format ISO, puis extrait manuellement de ce corps 200 en brisant des bretelles 22, 24 et 26

Le cas échéant, selon une variante, l'adaptateur peut être fabriqué directement au format notamment par injection.

La carte mini-UICC est ensuite fixée à l'intérieur de l'adaptateur pour une utilisation au format Plug-in ou ISO. Elle est produite par ailleurs avec un profil adapté 130, 140 permettant son blocage dans l'adaptateur qui comporte un profil complémentaire 110 permettant le montage amovible de la carte mini UICC.

Des tentatives ont également été effectuées par les inventeurs pour extraire la mini UICC directement de l'intérieur de la zone réservée à l'adaptateur, c-à-d de l'emplacement final de la carte UICC dans l'adaptateur.

Ces tentatives n'ont pas débouché sur des solutions techniques satisfaisantes au niveau du repositionnement dans l'adaptateur.

D'autre part, différents procédés de fabrication d'une mini-carte UICC ou d'adaptateur envisageables comprennent ceux dans lesquels on effectue:
- une extraction de la mini carte UICC à partir d'une carte ISO directement par poinçonnage ou après une prédécoupe,
- un moulage séparé directement au format final,
- une extraction multiple de plusieurs corps de carte mini-UICC ou plusieurs adaptateurs par découpes mécaniques d'une plaque plastique.

Enfin, la fourniture de carte d'identification d'abonné à l'utilisateur final s'accompagne d'une communication d'informations confidentielles (exemple non limitatif : un numéro de code PIN et un code de déblocage PUK). A cet effet, il est connu d'imprimer ces informations attenantes sur une feuille de papier ou de disposer ces informations sur un corps de carte au format ISO pour les distribuer ensuite. Il est connu également de disposer ces informations sur une partie détachable d'une carte plastique (sans puce) au format ISO.

Les procédés mis en oeuvre pour la fourniture d'une carte SIM, adaptateurs et informations attenantes ont l'inconvénient d'exiger un outillage spécifique et de multiples opérations qui s'avèrent en fin de compte onéreuses.

L'invention vise à résoudre les problèmes ci-dessus.

Elle a principalement comme objectif la conception d'un procédé de fabrication permettant la fourniture à moindre coût d'un adaptateur et d'une mini UICC ou le cas échéant d'informations confidentielles.

Pour permettre une industrialisation aisée et à moindre coût, il a été trouvé qu'il est nécessaire d'utiliser au maximum des étapes communes entrant dans la fabrication de l'adaptateur et de la mini UICC et le cas échéant de la fourniture des informations confidentielles tout en évitant les problèmes de faisabilité précédemment rencontrés.

A cet effet, l'invention a pour objet un procédé de fabrication d'une carte à puce (mini-UICC) d'un format réduit par rapport à un second format standard (plug-in UICC), et d'un adaptateur au second format (plug in UICC) associé à la carte à puce, ledit procédé comportant les étapes suivantes selon lesquelles:
- on fournit un corps de carte comportant une zone d'extraction de la carte à puce et une zone d'extraction de l'adaptateur
- on extrait au moins la carte à puce (mini UICC)du support

Le procédé se distingue en ce qu'il comprend l'étape selon laquelle on extrait la carte à puce d'une zone située en dehors d'un contour périphérique de la zone d'extraction de l'adaptateur.

De préférence, on utilise un support ayant un format standard (ISO) antérieur qui est supérieur au second format (plug in UICC).

Selon d'autres caractéristiques:
- le procédé comporte une étape préalable d'extraction d'une première sous-partie au second format standard (plug-in UICC)comportant la carte à puce;
- on extrait au préalable du support une seconde sous partie de support comportant la carte à puce.
- on extrait au préalable du support une troisièmesous-partie de support comportant l'adaptateur;
- on extrait du support au moins trois sous-parties comprenant respectivement ladite zone d'extraction de la carte à puce, des informations personnelles et ladite zone d'extraction de l'adaptateur;
- les différentes extractions sont effectuées manuellement au niveau de lignes de rupture;
- les différentes extractions sont effectuées par des moyens de découpe mécaniques;
- la carte à puce (mini UICC) est située sur le support de manière à effectuer au moins une opération d'encartage sensiblement comme celle effectuée sur une carte à puce au format ISO;
- les différentes pré-découpes ou lignes de rupture sont réalisées lors d'une opération d'injection plastique du support directement dans le moule à injection.

L'invention a également pour objet un support de carte à puce comportant une zone d'extraction d'une carte à puce (mini-UICC) d'un format réduit par rapport à un second format standard (plug-in UICC), et une zone d'extraction d'un adaptateur de la carte à puce au second format (plug in UICC),

Le support se distingue en ce que la zone d'extraction de la carte à puce est située en dehors d'un contour périphérique de la zone d'extraction de l'adaptateur.

De préférence, le support a un format standard (ISO) antérieur qui est supérieur au second format (plug-in UICC) ;

Selon d'autres caractéristiques, le support comporte :
- une première sous-partie au second format standard (plug-in UICC) comportant la carte à puce;
- une seconde sous-partie de support comportant la carte à puce;
- une troisième sous-partie de support comportant l'adaptateur;
- des informations et une ligne de rupture isolant les informations sur une quatrième sous-partie de support détachable;
- au moins trois sous-parties détachables délimitées par des lignes de rupture comprenant respectivement ladite zone d'extraction de la carte à puce, lesdites informations et ledit adaptateur;
- les différentes zones d'extraction sont délimitées ou matérialisées par des lignes de rupture favorisant une extraction manuelle;
- lesdites informations comprennent des informations relatives au(x) code(s) PIN et/ou PUK;
- les plages de contact de la carte à puce correspondent sensiblement avec l'emplacement normalisé des plages de contact d'une carte ISO;
- l'adaptateur a un emplacement dans le support de telle manière que les plages de contact de la carte à puce une fois placées dedans correspondent sensiblement avec l'emplacement normalisé des plages de contact d'une carte ISO.

D'autres particularités et avantages de l'invention apparaîtront à la lecture de la description qui suit donnée à titre d'exemple illustratif et non limitatif est faite en référence aux figures annexées pour lesquelles :
- la figure 1, déjà décrite, est une vue schématique de dessus d'une carte mini UICC au format standard ISO actuel, comportant un adaptateur;
- la figure 2 est une vue en coupe de la figure 1 selon A-A ;
- la figure 3 est une vue de dessus d'un support au format ISO d'un adaptateur et de la carte Mini UICC selon l'invention;
- la figure 4 est une vue de la figure 3 avec une double prédécoupe délimitant la carte Mini UICC et la "carte Plug in UICC" ;
- les figure 5, 6, 7 sont une vue de la figure 3 avec des sous-parties prédécoupées dans la carte au format ISO;

Selon le procédé, la carte à puce (mini-UICC) d'un format réduit par rapport à un second format standard (plug-in UICC) et un adaptateur au second format (plug in UICC) associé à la carte à puce sont extraits du même support.

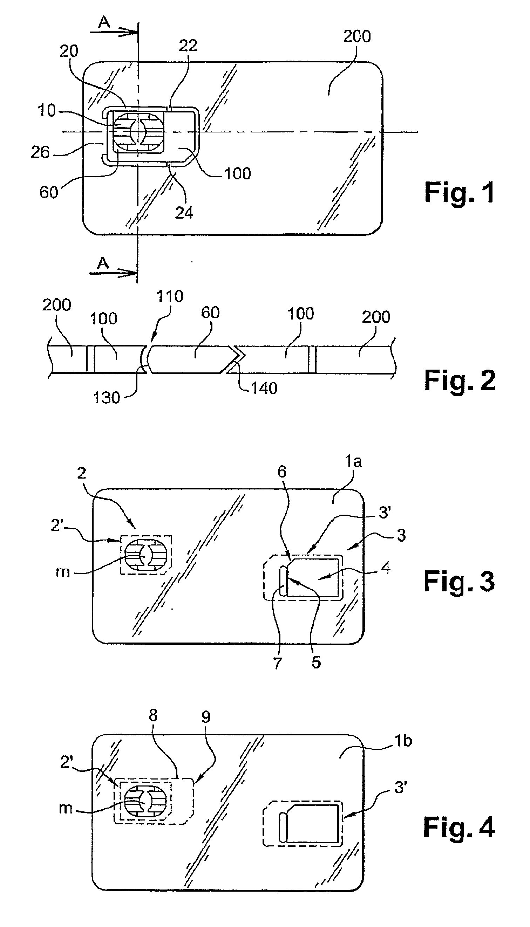

En se référant à la figure 3, on utilise de préférence un support (1a) au format ISO de manière à utiliser l'outil de production carte à puce existant et qui a fait ses preuves. D'une manière générale, on utilise un support qui a un format standard antérieur qui est supérieur aux formats de la carte réduite mini UICC et du second format.

Toutefois, d'autres formats pourraient être utilisés dès l'instant qu'ils offrent au moins deux zones réservées à l'extraction de l'adaptateur et de la mini carte UICC. En effet, selon l'invention, l'adaptateur et la mini carte UICC sont extraits de deux zones distinctes du corps de carte contrairement à l'art antérieur où on a fabriqué la mini UICC et l'adaptateur sur deux supports différents.

Plus particulièrement, la carte à puce 2 est extraite d'une zone située en dehors d'un contour périphérique délimitant la zone d'extraction de l'adaptateur 3 (comportant la fente de prédécoupe 3').

Le support 3 est un corps de carte en matière plastique ABS, PVC, PET etc...et peut être obtenue de différentes manières connues dans le domaine carte à puce notamment par injection ou lamination. Il comporte une cavité de réception d'un module (m). Le module comporte de manière connue des plages de contacts reliées à une puce de circuit intégrée et reposant sur un film diélectrique.

Dans une variante, le corps de carte est obtenu directement par injection avec les formes prédéfinies de l'adaptateur 3, c-à-d avec l'espace de réception de la mini UICC (évidement de réception 4) et/ou un profil adapté, par exemple, concave comme le profil (110) à la figue 2 ainsi que les prédécoupes 2' de la mini carte UICC, à l'intérieur desquelles est située une cavité destinée à recevoir le module (m). Le cas échéant on prévoit un moyen de montage élastique: lame élastique 5 sur un bord de l'espace de réception de la mini UICC.

Dans l'exemple, c'est le bord transversal adjacent au détrompeur 6 qui est concerné.

Cette lame est réalisée par un second évidement 6 du corps de carte de l'adaptateur. Les moules à injection comprennent à cet effet des noyaux ou des poinçons mobiles adaptés à réaliser ces évidements.

Les évidements peuvent être réalisés également par usinage.

Après l'encartage et le cas échéant, la personnalisation électrique, test, impression graphique, on peut procéder ensuite à l'extraction de la mini UICC et/ou de l'adaptateur.

Ainsi, on bénéficie d'étapes communes comme l'injection, l'impression, la personnalisation graphique et une seule chaîne de fabrication pour la réalisation des deux corps: mini UICC et adaptateur.

L'extraction peut s'effectuer à différents moments, par découpe, poinçonnage de la mini UICC et/ou de l'adaptateur. Les deux éléments sont ensuite conditionnés ensemble, le cas échéant avec un support contant des informations relatives à la carte. La carte, l'adaptateur, et les informations peuvent être par exemple ensachées ensembles ou fixées par adhésif sur une feuille de papier.

De préférence, notamment pour des raisons d'appairage, de facilité de conditionnement, de publicité (logo sur le corps de carte ISO),on effectue l'extraction manuellement par l'utilisateur final; à cet effet, des amincissements de matière autour de l'adaptateur et autour du mini UICC sont prévus de manière à extraire chaque élément par pression volontaire des doigts ou autre moyen simple. Ces amincissements ou pré-découpes sont réalisés par exemple au cours de l'injection comme décrit dans le brevet FR 2778002, ou postérieurement par pré-découpe mécanique.

De préférence, le support est au format ISO, de manière à pouvoir utiliser l'outillage et les machines spécifiques à la fabrication de carte à puce.

Ainsi par exemple, dans le produit obtenu, la zone réservée à la mini UICC comporte une cavité de module (m) dont l'emplacement correspond sensiblement à celui d'une carte à puce conforme à l'ISO. L'encartage est donc possible avec les machines d'encartage de module et peu de réglages ou adaptations.

Un autre emplacement de la cavité dans le corps de carte est possible mais nécessiterait des adaptations des machines.

Le produit obtenu avant extraction peut être utilisé comme carte à puce au format ISO bien que ce ne soit pas la finalité et bien qu'il ne satisfasse pas les critères de l'ISO eu égard à la présence d'une pré-découpe relative à l'adaptateur.

La zone réservée à l'adaptateur peut être disposée à différents emplacements du corps de carte (en dehors de la zone d'extraction de la mini UICC). On préfère toutefois un emplacement de telle manière que les plages de contact de la carte réduite une fois positionnée dedans correspondent sensiblement avec l'emplacement normalisé des plages de contact d'une carte à puce ISO (même après une rotation de 180° dans le plan de la carte et/ou retournement de la carte.)

Ainsi, il est possible, d'extraire la mini UICC pour une utilisation dans un téléphone portable et ensuite après un repositionnement de la mini UICC dans l'adaptateur non extrait, obtenir une configuration de carte à puce au format ISO.

Selon l'invention, une première sous-partie de support comportant la mini UICC et/ou l'adaptateur est extraite au préalable du support.

Dans une variante particulièrement remarquable illustré à la figure 4, la partie correspond au contour d'un plug-in UICC. La carte 1b comporte une zone 8 réservée à l'extraction d'un plug-in UICC. Cette zone peut être conçue et extraite de la même manière que les autres zones à extraire.

De préférence, on prévoit un amincissement ou pré-découpe partielle ou ligne de rupture (avec ou sans bretelles de liaison) correspondant au contour 9 d'une carte plug-in UICC et facilitant son extraction manuelle.

Dans les exemples, le support au format ISO n'est pas destiné à une utilisation par l'utilisateur final au format ISO. Ce support ne résisterait pas aux tests de flexion torsion de la norme ISO.

Dans le cas où l'utilisateur dispose de deux téléphones l'un prévu pour une carte plug-in UICC, l'autre pour une carte mini UICC, il pourrait alterner leur utilisation simplement en détachant la mini UICC, et l'adaptateur.

Pour une utilisation au format plug-in UICC, il suffit de positionner la mini UICC dans l'adaptateur extrait.

Selon l'invention, on peut extraire au préalable du support au moins une deuxième sous-partie de support 10a comportant la carte réduite et /ou au moins une troisième 12a sous-partie de support comportant l'adaptateur. De préférence, si l'extraction est manuelle, on extrait d'abord la mini UICC avant de détacher la sous-partie 10a.

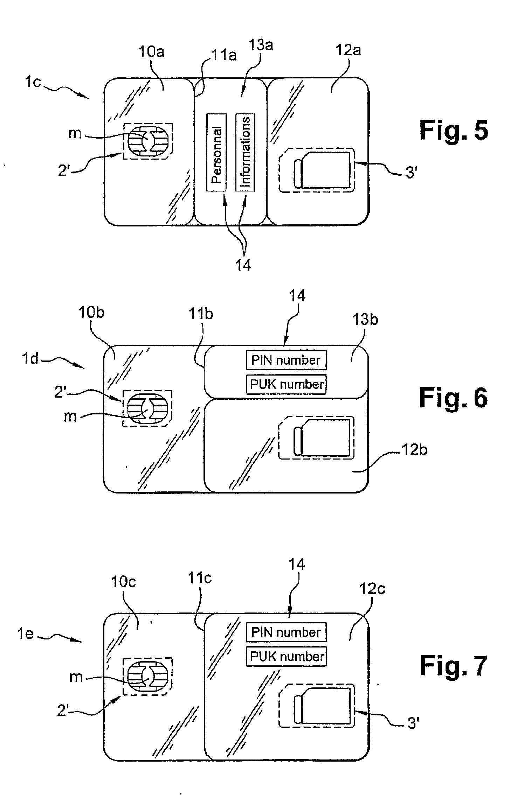

Le produit résultant est illustré aux figures 5, 6, 7. Il comprend des sous-parties 10a, 10b, 10c et 12a, 12b, 12c, pour respectivement la mini UICC et l'adaptateur, qui dans les exemples peuvent prendre différentes formes notamment rectangulaires avec des angles sensiblement arrondis. Ces sous-parties peuvent être conçues comme précédemment (notamment à l'injection) et délimitées par des lignes de rupture respectivement 11a, 11b, 11c favorisant l'extraction

Par exemple, les corps de carte (1a à 1e) présentent une longueur de 85 mm, largeur de 54 mm et épaisseur de 760µm.

Les corps 1c, 1b comportent une cinquième sous-partie distincte 13a, 13b destinée à recevoir des informations 14 qui peuvent être personnelles (code d'identification PIN) ou par exemple relatives à l'abonnement (code de déblocage PUK) au trois pré découpes transversales. Ces informations peuvent être sur la même sous-partie 12c que celle contenant l'adaptateur.

Les sous-parties ont une forme apte à être manipulé aisément ou par exemple être stocké dans un portefeuille, notamment une forme de languette rectangulaire.

Les sous-parties destinées à être conservées sont de préférence délimitées par des lignes de rupture formant des arrondis aux angles.

Ainsi, le procédé est considérablement simplifié quand il utilise des étapes communes telles que l'impression et la personnalisation graphique (impression d'un numéro, d'un code à barre) entrant dans la réalisation des trois objets (carte, adaptateur, informations); on utilise les machines à encarter (insérer les modules dans la cavité de corps de carte) mais aussi des machines de test, de conditionnement, de manipulation de carte au format ISO même s'il est en passe d'être révolu.

La matière résiduelle restant après l'extraction de la carte et adaptateur est utilisée à bon escient pour notamment supporter les informations confidentielles relatives à l'abonné ou servir de support de stockage facile à manipuler insérable dans un portefeuille.

Enfin, les informations destinées à être appairées avec la carte à puce mini UICC, le sont nécessairement par le biais de leur impression sur un support commun 3. Le conditionnement, la gestion des différentes sous-parties constituant un ensemble et la présentation au client en sont facilitées.

## Revendications

1. Procédé de fabrication d'une carte à puce (mini-UICC) d'un format réduit par rapport à un second format standard (plug-in UICC), et d'un adaptateur au second format (plug-in UICC) associé à la carte à puce, ledit procédé comportant les étapes suivantes selon lesquelles:
- on fournit un corps de carte comportant une zone d'extraction de la carte à puce et une zone d'extraction de l'adaptateur
- on extrait au moins la carte à puce (mini UICC)du support
**caractérisé en ce qu'**il comprend l'étape selon laquelle on extrait la carte à puce (2) d'une zone située en dehors d'un contour périphérique de la zone d'extraction de l'adaptateur.

2. Procédé selon la revendication précédente, **caractérisé en ce que** l'on utilise un support ayant un format standard (ISO) antérieur qui est supérieur au second format (plug-in).

3. Procédé selon l'une quelconque des revendications précédentes, **caractérisé en ce qu'**il comporte une étape préalable d'extraction d'une première sous-partie (8) au second format standard (plug-in UICC) comportant la carte à puce.

4. Procédé selon l'une quelconque des revendications précédentes, **caractérisé en ce qu'**on extrait au préalable du support une troisième sous-partie (10a, 10b, 10c) de support comportant la carte à puce.

5. Procédé selon l'une quelconque des revendications précédentes, **caractérisé en ce qu'**on extrait au préalable du support une seconde sous-partie (12a, 12b, 12c) de support comportant l'adaptateur.

6. Procédé selon l'une quelconque des revendications précédentes, **caractérisé en ce que** l'on extrait du support au moins trois sous-parties (10a, 12a, 13a) comprenant respectivement ladite zone d'extraction de la carte à puce, ladite zone d'extraction de l'adaptateur et des informations personnelles.

7. Procédé l'une quelconque des revendications précédentes, **caractérisé en ce que** les différentes extractions sont effectuées manuellement au niveau de lignes de rupture (11a, 11c, 11c).

8. Procédé selon l'une quelconque des revendications précédentes, **caractérisé en ce que** les différentes extractions sont effectuées par des moyens mécaniques.

9. Procédé selon l'une quelconque des revendications précédentes, **caractérisé en ce qu'**on détermine la position de la carte à puce (mini UICC) sur le support de manière à effectuer au moins une opération d'encartage sensiblement comme celle effectuée sur une carte à puce au format ISO.

10. Procédé selon l'une quelconque des revendications précédentes, **caractérisé en ce que** les différentes pré-découpes ou lignes de rupture sont réalisées lors d'une opération d'injection plastique du support directement dans le moule à injection.

11. Support de carte à puce comportant une zone d'extraction d'une carte à puce (mini-UICC 2) d'un format réduit par rapport à un second format standard (plug-in UICC 9), et une zone d'extraction d'un adaptateur (3) de la carte à puce au second format (plug-in UICC),
**caractérisé en ce que** la zone d'extraction de la carte à puce est située en dehors d'un contour périphérique de la zone d'extraction de l'adaptateur (3).

12. Support de carte à puce selon la revendication précédente, **caractérisé en ce que** le support a un format standard (ISO) antérieur qui est supérieur au second format (plug-in UICC).

13. Support de carte à puce selon l'une des revendications 11 à 12, **caractérisé en ce qu'**il comporte une première sous-partie (9) au second format standard (plug-in UICC) comportant la carte à puce (2).

14. Support de carte à puce selon l'une des revendications 11 à 13, **caractérisé en ce qu'**il comporte une seconde sous-partie de support (10a) comportant la carte à puce.

15. Support de carte à puce selon l'une des revendications 11 à 14, **caractérisé en ce qu'**il comporte une troisième sous-partie (12a) de support comportant l'adaptateur.

16. Support de carte à puce selon l'une des revendications 11 à 15, **caractérisé en ce** les différentes zones d'extraction sont délimitées ou matérialisées par des lignes de rupture (11a, 11b, 11c) favorisant une extraction manuelle.

17. Support de carte à puce selon l'une des revendications 11 à 16, **caractérisé en ce qu'**il comporte des informations et une ligne de rupture isolant les informations (14) sur une quatrième sous-partie (12c, 13a, 13b) de support détachable.

18. Support de carte à puce selon la revendication 17, **caractérisé en ce qu'**il comporte au moins trois sous-parties détachables (10a, 12a, 13a)délimitées par des lignes de rupture comprenant respectivement ladite zone d'extraction de la carte à puce, ledit adaptateur et lesdites informations.

19. Support selon l'une des revendications 17 à 18, **caractérisé en ce que** lesdites informations comprennent des informations relatives au(x) code(s) PIN et/ou PUK.

20. Support de carte à puce selon l'une des revendications 11 à 19, **caractérisé en ce que** les plages de contact de la carte à puce correspondent sensiblement avec l'emplacement normalisé des plages de contact d'une carte ISO.

21. Support de carte à puce selon l'une des revendications 11 à 20, **caractérisé en ce que** l'adaptateur a un emplacement dans le support de telle manière que les plages de contact de la carte à puce une fois placées dedans correspondent sensiblement avec l'emplacement normalisé des plages de contact d'une carte ISO;

## Claims

1. A method for manufacturing a chip card (mini-UICC) of a smaller size than a second standard (plug-in UICC) size, and an adapter for the second (Plug-in UICC) size associated with the chip card, said method including the following steps,
- a card body including an area for removing the chip card and an area for removing the adapter is provided;
- at least the chip card (mini UICC) is removed from the substrate,
**characterized in that** it includes the step in which the chip card (2) is removed from an area located outside a periphery limit of the adapter removing area.

2. A method according to the preceding claim **characterized in that** a substrate of a prior standard (ISO) size which is larger than the second (plug-in) size is used.

3. A method according to any one of the preceding claims, **characterized in that** it includes a removal step of removing a first sub-part (8) of the second standard (plug-in UICC) size including the chip card.

4. A method according to any one of the preceding claims, **characterized in that** a third sub-part (10a, 10b, 10c) is previously removed from the substrate including the chip card.

5. A method according to any one of the preceding claims, **characterized in that** a second sub-part (12a, 12b, 12c) is previously removed from the substrate including the adapter.

6. A method according to any one of the preceding claims, **characterized in that** at least three sub-parts (10a, 12a, 13a) respectively comprising said chip card removing area, said adapter removing area and personal information are removed from the substrate.

7. The method according to any one of the preceding claims, **characterized in that** the various removal operations are carried out manually at breaking lines (11a, 11c, 11d).

8. A method according to any one of the preceding claims, **characterized in that** the various removals are carried out using mechanical means.

9. A method according to any one of the preceding claims, **characterized in that** the position of the chip card (mini UICC) on the substrate is determined so as to carry out at least one inserting operation substantially like the one carried out on a chip card of an ISO size.

10. A method according to any one of the preceding claims, **characterized in that** the various scores or breaking lines are carried out during a plastic injection operation of that substrate, directly in the injection mould.

11. A chip card substrate including a chip card removal area (mini UICC 2) of a smaller size than the second standard (plug-in UICC 9) size, and an area for removing the adapter (3) from the chip card of the second (plug-in UICC) size, **characterized in that** the chip card removal area is located outside a periphery limit of the adapter removal area (3).

12. A chip card substrate according the preceding claim **characterized in that** the substrate is of a prior standard (ISO) size which is larger than the second (plug-in UICC) size.

13. A chip card substrate according to one of claims 11 to 12, **characterized in that** it includes the first sub-part (9) of a second standard (plug-in UICC) size including the chip card (2).

14. A chip card substrate according to one of claims 11 to 13, **characterized in that** it includes the second substrate sub-part (10a) including the chip card.

15. The chip card substrate according to one of claims 11 to 14, **characterized in that** it includes a third substrate sub-part (12a) including the adapter.

16. A chip card substrate according to one of claims 11 to 15, **characterized in that** the various removal areas are defined or marked by breaking lines (11a, 11b, 11c) which facilitates a manual removal.

17. A chip card substrate according to one of claims 11 to 16, **characterized in that** it includes information and a breaking line separating the information (14) on a removable fourth sub-part (12c, 13a, 13b) of the substrate.

18. A chip card substrate according to claim 17, **characterized in that** it includes at least three removable sub-parts (10a, 12a, 13a) defined by breaking lines including said chip card removal area, said adapter and said information, respectively.

19. The substrate according to one of claims 17 to 18, **characterized in that** said information include information relating to PIN and/or PUK code or codes.

20. A chip card substrate according to one of claims 11 to 19, **characterized in that** the contact pads on the chip card substantially correspond with the standardized location of the contact pads on an ISO card.

21. A chip card substrate according to one of claims 11 to 20, **characterized in that** the location of the adapter on the substrate is such that the contact pads of the chip card are located inside these and thus substantially correspond to the standardized location of the contact pads of an ISO card.

## Patentansprüche

1. Herstellungsverfahren einer Chipkarte (Mini-UICC) eines kleineren Formats als ein zweites Standardformat (plug-in UICC) und eines Adapters an das der Chipkarte zugeordnete zweite Format (plug-in UICC), wobei das genannte Verfahren die folgenden Schritte umfasst:
- Bereitstellung eines Kartenkörpers mit einer Entnahmezone der Chipkarte und einer Entnahmezone des Adapters,
- Entnahme mindestens der Chipkarte (Mini UICC) aus dem Träger,
**dadurch gekennzeichnet, dass** es den Schritt umfasst, bei dem man die Chipkarte (2) aus einer außerhalb einer Umfangskontur der Entnahmezone des Adapters gelegenen Zone entnimmt.

2. Verfahren gemäß dem vorangehenden Anspruch, **dadurch gekennzeichnet, dass** man einen Träger eines bekannten Standardformats (ISO) verwendet, das größer ist als das zweite Format (plug-in).

3. Verfahren gemäß einem der vorangehenden Ansprüche, **dadurch gekennzeichnet, dass** es einen vorherigen Entnahmeschritt eines ersten Teilabschnitts (8) im zweiten Standardformat (plug-in UICC) umfasst, der die Chipkarte enthält.

4. Verfahren gemäß einem der vorangehenden Ansprüche, **dadurch gekennzeichnet, dass**
- man vorher aus dem Träger einen dritten Träger-Teilabschnitt (10a, 10b, 10c) entnimmt, der die Chipkarte enthält.

5. Verfahren gemäß einem der vorangehenden Ansprüche, **dadurch gekennzeichnet, dass** man vorher aus dem Träger einen zweiten Träger-Teilabschnitt (12a, 12b, 12c) entnimmt, der den Adapter enthält.

6. Verfahren gemäß einem der vorangehenden Ansprüche, **dadurch gekennzeichnet, dass** man aus dem Träger mindestens drei Teilabschnitte (10a, 12a, 13a) entnimmt, die jeweils die genannte Entnahmezone der Chipkarte, die genannte Entnahmezone des Adapters und persönliche Informationen enthalten.

7. Verfahren gemäß einem der vorangehenden Ansprüche, **dadurch gekennzeichnet, dass** die einzelnen Entnahmen manuell im Bereich von Bruchlinien (11a, 11b; 11c) erfolgen.

8. Verfahren gemäß einem der vorangehenden Ansprüche, **dadurch gekennzeichnet, dass** die einzelnen Entnahmen anhand mechanischer Mittel erfolgen.

9. Verfahren gemäß einem der vorangehenden Ansprüche, **dadurch gekennzeichnet, dass** man die Position der Chipkarte (mini UICC) auf dem Träger so bestimmt, dass mindestens eine Einschussoperation wie etwa diejenige bei einer Chipkarte im ISO-Format stattfindet.

10. Verfahren gemäß einem der vorangehenden Ansprüche, **dadurch gekennzeichnet, dass** die einzelnen Vorstanzungen oder Bruchlinien bei einer Kunststoffeinspritzungsoperation des Trägers direkt in der Einspritzform realisiert werden.

11. Chipkartenträger mit einer Entnahmezone einer Chipkarte (Mini UICC 2) eines kleineren Formats als ein zweites Standardformat (plug-in UICC 9) und einer Entnahmezone eines Adapters (3) der Chipkarte im zweiten Format (plug-in UICC),
**dadurch gekennzeichnet, dass** sich die Entnahmezone außerhalb einer Umfangskontur der Entnahmezone des Adapters (3) befindet.

12. Chipkartenträger gemäß dem vorangehenden Anspruch, **dadurch gekennzeichnet, dass** der Träger ein bekanntes Standardformat (ISO) hat, das größer ist als das zweite Format (plug-in UICC).

13. Chipkartenträger gemäß einem der Ansprüche 11 bis 12, **dadurch gekennzeichnet, dass** er einen ersten Teilabschnitt (9) im zweiten Standardformat (plug-in UICC) aufweist, der die Chipkarte (2) enthält.

14. Chipkartenträger gemäß einem der Ansprüche 11 bis 13, **dadurch gekennzeichnet, dass** einen zweiten Träger-Teilabschnitt (10a) aufweist, der die Chipkarte enthält.

15. Chipkartenträger gemäß einem der Ansprüche 11 bis 14, **dadurch gekennzeichnet, dass** er einen dritten Träger-Teilabschnitt (12a) aufweist, der den Adapter enthält.

16. Chipkartenträger gemäß einem der Ansprüche 11 bis 15, **dadurch gekennzeichnet, dass** die einzelnen Entnahmezonen von Bruchlinien (11a, 11b, 11c) begrenzt oder materialisiert werden, die eine manuelle Entnahme erleichtern.

17. Chipkartenträger gemäß einem der Ansprüche 11 bis 16, **dadurch gekennzeichnet, dass** er Informationen und eine Bruchlinie aufweist, die die Informationen (14) auf einem ablösbaren vierten Träger-Teilabschnitt 12c, 13a, 13b) abtrennt.

18. Chipkartenträger gemäß Anspruch 17, **dadurch gekennzeichnet, dass** er mindestens drei ablösbare, von Bruchlinien begrenzte Teilabschnitte (10a, 12a, 13a) aufweist, die jeweils die genannte Entnahmezone der Chipkarte, den genannten Adapter und die genannten Informationen enthalten.

19. Chipkartenträger gemäß einem der Ansprüche 17 bis 18, **dadurch gekennzeichnet, dass** die genannten Informationen Informationen bezüglich des (der) PIN- und/oder PUK-Codes umfassen.

20. Chipkartenträger gemäß einem der Ansprüche 11 bis 19, **dadurch gekennzeichnet, dass** die Kontaktbereiche der Chipkarte etwa dem genormten Sitz der Kontaktbereiche einer ISO-Karte entsprechen.

21. Chipkartenträger gemäß einem der Ansprüche 11 bis 20, **dadurch gekennzeichnet, dass** der Adapter derart in dem Träger sitzt, dass die Kontaktbereiche der Chipkarte nach ihrem Einfügen etwa dem genormten Sitz der Kontaktbereiche einer ISO-Karte entsprechen.
